# EUROPEAN PATENT APPLICATION

(11) **EP 1 184 789 A2**
(43) Date of publication of application: **06.03.2002**
(21) Application number: 01307180.8
(22) Date of filing: 23.08.2001
(51) Int. Cl.: G06F 11/34

(54) **Method for accessing data and processing metrics data using encoded inbound anchors and automatically generated markup language files**

(30) Priority: 31.08.2000 US 652448
(71) Applicant: Hewlett-Packard Company, Palo Alto, CA 94304 (US)
(72) Inventor: Silverstein, Alan J., Fort Collins, CO 80525 (US)
(74) Representative: Jackson, Richard Eric

(57) **Abstract**

The invention includes a program and method which allows information contained within build or other process log files, audit trails, or transaction records to be easily accessible to programmers and developers. The log files 120 are HTMLized 130 by the addition of HTML codes, or equivalent, within the log files and the addition of encoded inbound anchors 225. These encoded inbound anchors allow process metrics, such as the number of times an error, warning or note occurs, to be calculated and displayed to the user. Additionally, simplified displays can highlight the most severe problem which has occurred during the associated build for programmer consideration. A table of contents 135 can also be generated which contains hyperlinks which can be used to access any of the associated files and allows the user to jump immediately to a selected error, warning, note or other message, in the context of the full log file. Additionally, high level information is presented to the programmer with detailed information available with a single selection of the appropriate hyperlink. This method also allows the display of build information for a single process, or the combination of information pertaining to multiple builds, to be manipulated and presented to the user at their direction.

## Description

### TECHNICAL FIELD

This invention relates to the organization and interrelationship of computer log files and more particularly to a methodology for the use of encoded inbound anchors and automatically generated HTML files to produce hyperlinked, cross-referenced HTML files and the generation of supporting process metrics.

### BACKGROUND

The Internet World-Wide Web (WWW) utilizes a web browser program at the user's computer (a web client program) to access information provided at a web server site. The protocols and standards which define WWW include hypertext links embedded within a document (referred to herein as hyperlinks) as defined by the HyperText Markup Language (HTML) standards. Documents are communicated via the HyperText Transfer Protocol (HTTP). A markup language is a way of embedding within any document meta commands, usually invisible to the user, that direct how to display or print the text in the document. A hyperlink is an object (text or image) on a page of information which links the user, if selected, to other related information. In standard WWW web browser programs, the user can move to this related information by simply "selecting" or "clicking on" the link as it is displayed on the user's computer screen.

Links (or hyperlinks) are also known outside the context of HTML web browsing programs and remotely accessible web pages. For example, local "help" files as commonly provided in operating systems and applications such as Microsoft® Windows or Microsoft® Office tools are often designed with hyperlinks to permit the user to thereby navigate among related help messages and topics. Further, web browsers commonly support other protocols in addition to HTML and use hyperlinks therewith. For example, most web browsers also support the file transfer protocol (FTP) wherein file system directories may be viewed as a tree structure and the files and subdirectories therein are displayed by the web browser as hyperlinks.

Associated with the WWW are a number of web server sites functioning as "search engines" which provide access to indexed information to locate web pages that are of interest to a user. In general, these search engines search large, proprietary databases for matches against a set of user supplied keywords. A list of web pages which match the user's supplied keyword search is then returned to the user's web browser. The list of matching web pages is presented by the web browser program on the user's computer display as a list of links to the matching web pages. The user may then select the links of interest and click the link to visit that web page.

Standard features of conventional web browser programs support simplified "navigation" of sites on the web. For example, standard features include the ability to move forward or backward over a chain of previously viewed web pages. A first web page visited may provide a link to another page of interest and so on. Such multiple links may be thought of as a chain. Once having navigated to one page in such a chain of linked pages, the web browser provides standard features to navigate forward or backward on the chain of links already visited.

Typically, a Universal Resource Locator (URL) is used by a user to view a predefined static page of information. Alternatively, a URL can be used to allow a user to access a Common Gateway Interface (CGI) program which generates the page displayed to the user after the user accesses the URL. Either type of web page, a static page or a generated page, can contain hyperlinks.

A system for rapidly and easily searching large collections of documents is described in U.S. Patent 6,055,538 of *Kessenich, et al.* which is entitled "Method and System For Using Web Browser To Search Large Collections Of Documents" and issued April 25, 2000 and is incorporated herein by reference in its entirety. The *Kessenich* patent uses standard web browser programs as the user interface to perform searches. The *Kessenich* patent parses a collection of text documents to identify symbols therein and builds a database file which identifies the file and line locations of each symbol identified. The database file is constructed to permit rapid searching for symbols to permit interactive use of the present invention as a search tool. A database client process interacts with the web browser via standard CGI techniques to convert browser commands and queries into appropriate server process requests. A server process receives such requests and manipulates the database files in response to the requests. Query results returned to the client process are then reformatted by the client process to return a document with hypertext links in place of search keys located in the database (*e.g.*, an HTML page). The *Kessenich* patent thereby provides for rapid searching of large collections of text documents which is not coupled to a specific toolset used to create any one of the documents and which uses a simple and well-known user interface, namely, web browsers.

Generally, a well written computer program undergoes four distinct phases of development: specification, design, coding and test. In the specification phase, the problem which the computer program is meant to solve, or the task which the computer program is meant to perform, is determined and specified. In the design phase, a solution to the specified problem, or a method of accomplishing the specified task, is designed. In the coding phase, the design solution or design method is implemented in writing in a particular computer language, such as FORTRAN, C, PASCAL, COBOL, other high level programming languages or in assembly language. Finally, in the test phase the computer program is tested to determine if it meets the specification and design requirements. A build is usually performed to transform the output of the coding phase to a machine executable source for the test phase.

In the coding phase, computer programmers typically create computer programs by writing the programs in a form that cannot be directly executed by the computer on which the program is intended to operate (the target machine). This form of the program, known as the source code, is then translated into instructions the target machine can directly execute (known as object code, executable code, or machine instructions). While there are various stages and types of such translations and types of tools for such translation (such as, compilers, assemblers, linkers), for the purpose of the present application, these tools are each encompassed within the term "compiler." The computer programmer typically uses the compiler to "build" the software program.

Software development typically involves an iterative process in which the programmer repeatedly goes through the process of making changes in the source code and observing the program's characteristics during the test phase as the executable code is run. If problems are encountered in the program, a programmer generally uses a tool or collection of tools known as a debugger. A debugger allows a programmer to observe program operation by supplying intermediate variable values, setting breakpoints, specifying variable values, and providing other data useful to understanding, analyzing and validating program operation. Additionally, a programmer needs to resolve problems encountered when a build is performed to transform their source code into executable code.

As the size and complexity of computer programs increase, so does the time associated with the build process. Builds of large programs are typically performed during off shift hours, such as overnight when large blocks of spare computer time are available. Programmers or developers who initiate the build process themselves may view the outputs on a terminal screen or write these results to a log file. Builds performed during off shift hours typically generate the executable code and a log file. Alternatively, programs can be written to begin the build process during the off shift hours without additional human intervention. The resulting log files may contain errors, warnings or notes generated by the build process. An error is a fatal problem which prematurely terminates the build process. A warning contains information the programmer or developer should review and consider, but does not terminate the build process. A note is informational in nature and may be temporarily ignored without adverse consequences and, like the warning, does not prematurely terminate the build process. As previously described the build process should result in an executable code and a log file. When the log file contains errors, the executable code contains fatal problems, and by definition will not operate properly. An executable code associated with a log file which contains warnings may or may not operate properly. Executable code associated with a log containing only notes should run but may not give the expected results.

Depending on the size, complexity and problems contained within the source code, these log files may consist of a few pages or hundreds of pages. Ideally, the programer would review the log file to determine what errors, warnings and notes occurred during the build process and correct each one. If an error occurred, the developer could normally go to the end of the log file to determine the error message. Generally, since the error halted the build process, the executable code will not be completed. Alternatively, in the presence of an error, provisions can be made to continue the build process at a later point in the source code which allows the programmer to identify as many errors as possible in a single run. Warnings and notes may also require the programmer to take specific action to clear up these potential problems. Without reviewing these log files, programmers are not assured the executable code performs exactly as expected. However, because of time constraints and the potential for a large number of messages, many of which may be superfluous, typically programmers do not spend the time required to go through large build log files to determine the acceptability of the executable code.

A need exists for a simplified method of accessing and reviewing these log files to determine the status of the executable code. A further need exists for the simplification of these log files to allow the programmer to determine the status of the build in a minimum amount of time. A further need exists for the programmers to easily determine the problems resulting from the build. A further need exists for this method of accessing the log files to be independent of the platform on which the program is run. A further need exists to extrapolate these features into many more process steps than to just the build process step. These process steps may include preparing a build environment, obtaining software product source codes to build, packaging constructed files to deliver and running automated regression tests on executable codes.

### SUMMARY OF THE INVENTION

The present invention is directed to a system and method which allows ready access and review of the information contained within the log files (*e.g*., audit and/or security trails, transaction records, and other files indicative of the status and/or results produced by a process) to determine the status of the result *(e.g.,* executable code, database, etc.). The invention further provides a methodology for the automatic simplification of the information contained within the log files to allow the programmer to determine the status of the result (*e.g.*, build in connection with program compilation, etc.) in a minimum amount of time. The invention also allows the programmers to easily determine the problems resulting from and/or encountered during the audited process *(e.g.,* build). The invention further provides hyperlinked connections between related files for easy programmer access to the information and to allow the programmer to build and access a table of contents which organizes the available information. The invention can further provide the programmer with metrics to determine the overall status of the audited process (*e.g.*, build, etc.). The invention also provides simplification, aids error determination, and hyperlinked connections and metrics for any process that results in log files.

It should be noted that, for ease of explanation, the invention is described in terms of specific sets of capabilities available using, for example, HTML, but is equally applicable to other types of markup languages such as SHTML, XML, SGML, nroff, troff, etc., such that references to HTML, unless explicitly or inherently limited to HTML, include the broader class of markup languages. Similarly, although structures and terminology consistent with HTML have been adopted, corresponding structures used by other markup languages are likewise included. Thus, for example, references to inbound anchors supported by HTML include similar labels identifying a location in an object (such as a file) that is the target of a pointer such as an outbound anchor provided by HTML. Further, while the present disclosure describes log files resultant from a program build, the term log files should be interpreted to include audit and security trails, transaction records, and other data generated, during the performance of a process, indicative of an operation of the process or an output provided by the process.

The present invention is directed to a program and method which accesses a log file and automatically indexes the log file by means of anchors or related methods. This indexing performed by the program includes embedding encoded inbound anchors (a point within a file the user can transfer to) or flags, within the log file to selected entries, or areas of interest which are contained in the log file and, using these encoded anchors and hyperlinks, create cross-references between related files for easy assimilation of the contained information. As used herein, an anchor is a type of markup which defines, on the outbound side, a hyperlink which is a pointer to a file or a location and, on the inbound side, the target of a pointer or hyperlink. In the present invention, some or all of the inbound anchors have labels whose values encode information according to a standard method. For example, the encoded portion may include a classification, a unique number and a number identifying the process that created that anchor. The encoded anchors can also be used for the automatic generation of process metrics. These process metrics may include counting the number of instances of specific parameters or areas of interest, identifying the most critical parameters present or the calculation of other metrics of interest to the user. Encoding information into the label of an inbound anchor is a means of attaching information to that point in the document which can be used in the generation of summary metrics and can be used in the generation of tables of contents. When an HTML format is used, the encoded anchors are preferably HTML codes and ensure the log file information can be accessed via hyperlinks. The status of the resulting builds or other output, or of the portions of the process leading up to, or following, the build can be displayed, along with the appropriate metrics in various formats including a table or similar display technique. These tables can include hyperlinks within the cells of the tables to allow the user to access additional information with a single selection. A table of contents can also be automatically configured using the names of the log files. The organization of the table of contents typically represents the organization of the associated files. These tables of contents can also be configured in an HTML format.

According to another aspect of the invention, a methodology is provided which allows the automatic generation and the simplified display of the information contained in a number of log files. This methodology allows the programmer to identify the entries of interest within the log file and highlight these entries with encoded anchors. Process metrics, including the number of times the entry of interest appears, the greatest severity of the problems encountered by a specific process or metrics of similar substance, can be automatically calculated according to a feature of the methodology. Once determined, the information contained in the log entries can be displayed in a simplified format such as a table with the related and appropriate process metrics. Embedded hyperlinks can again be used by the user to transition between the associated displays. Within this aspect of the invention, HTML codes can be used for the encoded anchors. Process metrics may be calculated for the errors, warnings or notes which appear in the log files, and links can be created between the various files by the use of hyperlinks. Parameters associated with the individual variations, or "flavors" (e.g. minor variations in code or constants used in the code) of the source code files can also be displayed for user consideration.

According to another aspect of the invention, a program and a methodology is provided which allows a user to make copious detailed output from complex and varied automated processes that run periodically or when initiated to transform data, such as building (compiling) executable programs from source files, easier to rapidly assess for problems and status, and also easier to "navigate" interactively to view unusual or abnormal results, as well as normal results, in context, by use of standard HTML, web browser (client), and web server features or the equivalent. This detailed output can be from a single log file or audit trail or from a number of log files and audit trails. This program or methodology further includes the step of one or more automated processes that run periodically or when initiated to transform data and record one or more log files (or audit trails) of their actions and results, with various processes producing various types of log files. These log files are produced as, or converted to, HTML ("HTMLized"), and tagged with one or more standard inbound HTML anchors to mark locations of interest so the locations can be the targets of hyperlinks specified by outbound HTML anchors in other locations or other HTML files. The invention also includes markup languages and anchors equivalent to the HTML language and anchors. This program and method further includes the step of encoding information into the inbound anchor labels in a standard manner, regardless of which process produces each log file or portion, such that the anchor labels are not only unique targets of the inbound hyperlinks within each log file, but also carry and convey information about the type of event recorded at that location in the log file, such as a problem (error, warning, note), start or end of a test case, or start of a cross-reference section. This program and method further includes the steps of a standard process for one or more software programs that: 1) scans one or more HTMLized log files in one or more log directories for recognized encodings in inbound HTML anchor labels or the equivalent, 2) counts the anchors by types to summarize the counts to a single or a plurality of metrics files that accrue numeric summaries for many process runs and logs directories, and 3) constructs tables of contents files. These tables of contents files can be HTML pages or their equivalents, and list all files, whether HTMLized or not, in one or more log directories, either directly or represented as collections of cross-reference sections. The table of contents files also summarizes problems in or status from each log file or cross-reference section based on its encoded inbound HTML anchors, with the table of contents files containing outbound anchors (hyperlinks) to each log file or cross-reference section and to each problem or other interesting location, such as the start of the text produced by a test case, in each log file or cross-reference section. The program and method of the invention further includes the steps of a standard process (one or more software programs) known as Common Gateway Interface (CGI) programs, which run on a web server system or the equivalent and read one or more metrics files to produce various HTML output files (web pages) or the equivalent which contain various levels of summary tables whose cells are hyperlinks to view more specific and detailed information, such as more detailed tables, eventually by following the chain of hyperlinks reaching log directory table of contents files and then actual log files.

The foregoing has outlined rather broadly the features and technical advantages of the present invention in order that the detailed description of the invention that follows may be better understood. Additional features and advantages of the invention will be described hereinafter which form the subject of the claims of the invention. It should be appreciated by those skilled in the art that the conception and specific embodiment disclosed may be readily utilized as a basis for modifying or designing other structures for carrying out the same purposes of the present invention. It should also be realized by those skilled in the art that such equivalent constructions do not depart from the spirit and scope of the invention as set forth in the appended claims.

### BRIEF DESCRIPTION OF THE DRAWINGS

For a more complete understanding of the present invention, reference is now made to the following descriptions taken in conjunction with the accompanying drawing, in which:
FIGURE 1 is an overall block diagram of a method of accessing data and processing metrics data using encoded inbound anchors and automatically generated HTML files;
FIGURE 2 is a block diagram of an "HTMLizer" program;
FIGURE 3 is a status screen of the developer's view of the overall overnight processes;
FIGURE 4 is a build status screen containing information for multiple runs;
FIGURES 5A and 5B are a runtests status screen containing additional information for product process steps;
FIGURE 6 is a build status screen of a single run; and
FIGURES 7A, 7B and 7C show an automatically generated table of contents.

### DETAILED DESCRIPTION

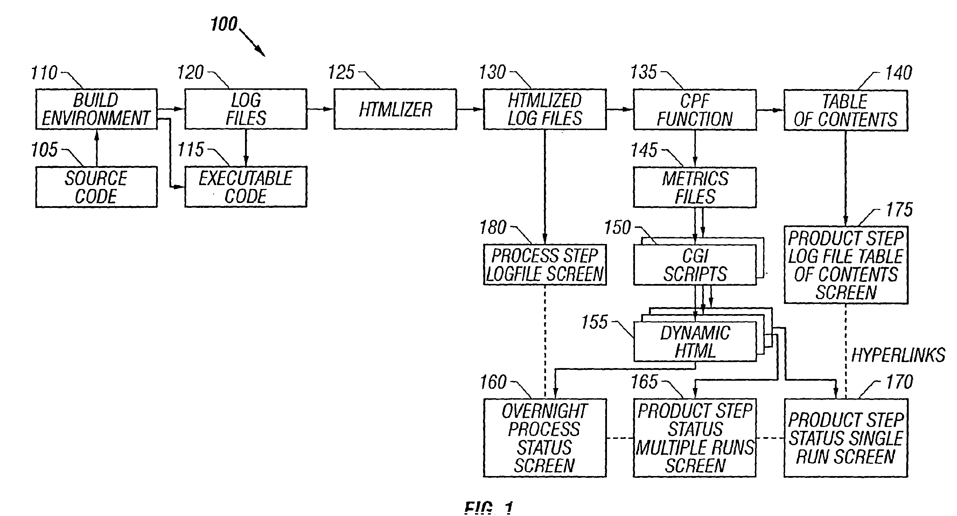

FIGURE 1 is an overall block diagram of a method according to the present invention. As previously described, the developer or programmer writes the program in source code which is depicted in block 105. In order to obtain executable code, a build of the source code 105 must be performed. The build is performed in a build environment 110. Once the build is performed, two different types of files are created, an executable code 115 and log files 120. The executable code 115 is the code which is run by the processor to perform the desired functionality. The log files 120 which are generated during the build contain the errors, warnings and notes described previously. These log files 120 can be used by the developer to determine whether or not the build was successful and to identify potential problems encountered during the build. As presently configured these log files are unwieldy and difficult to use. A build of a single source code file may result in one or more log files and a build of more than one source code file may result in one or more log files.

These log files 120 are provided to an "HTMLizer" 125 which creates "HTMLized" log files 130. The "HTMLizer," explained in further detail below, converts the ASCII error log file into an HTML format by embedding appropriate HTML headers and trailers and cross references using HTML anchors. It also recodes selected text to an appropriate format for display. In block 135 various Common Process Framework (CPF) functions are performed on the "HTMLized" log files from block 130. CPF functions may include the generation of the table of contents and metric information, including statistical analysis. The term "log file(s)" includes the original log file directly generated as a result of the build, as well as copies of that file or other data generated as a result of parsing, editing, or otherwise incorporating other portions or derivatives of the log file into one or more log files. In the case of other markup languages, an appropriate converter would be used to generate a marked-up document, e.g., an "XMLizer" in the case of XML, etc.

The result of block 135 is a table of contents file in block 140 and numerous metric files in block 145. A metric file is created for each product and each step, and metrics files may be appended for multiple runs. These metric files 145 are used by the Common Gateway Interface (CGI) scripts 150 which create web pages which summarize the metrics contained in block 145. The web pages created contain hyperlinks to each of the associated web pages and to a table of contents file. Together, these hyperlinked HTML files form dynamic HTML files in block 155.

The metric and status information from the dynamic HTML blocks 155 can then be displayed in several different formats, a different format for each HTML block 155. The three formats shown in FIGURE 1 include the Overnight Process Status Screen block 160, the Product Step Status Multiple Runs Screen block 165 and the Product Step Status Single Run Screen block 170. The information contained in the table of contents file from block 140 can also be presented in a Product Step Log File Table Of Contents Screen in block 175. Finally, the information contained in the HTMLized log files of block 130 can be displayed in the Process Step Log File Screen of block 180.

As previously described, a build of the source code from block 105 is performed in the build environment 110 which creates two types of files, the executable code 115 and the log files 120. The executable code can be used in the test phase to ensure that the software performs as expected. The log files from block 120 are used to determine the successfulness of the build performed within the build environment 110. This information could be contained in a single log file or can be broken up and displayed in numerous smaller log files. The log files of block 120 can be used by the programmer or the developer as configured by the build environment to determine the successfulness of the build. However, the format of these log files will require the programmer or developer to devote a substantial amount of time to determine the successfulness of the build. The present invention organizes and makes the information contained in the log files easily accessible to the programmer or developer. Additionally, numerous source code 105 files can be sent to the build environment 110 during a specific period of time, for instance, overnight; and the resulting log files can contain the information pertaining to these source code files. A build of each source code file can result in a specific log file; the log information for more than one source code file can be contained in a single log file, or the log information for a single source code file can be broken up to be captured by numerous log files. These log files can also be used by system maintenance personnel to oversee the operation of the associated computers.

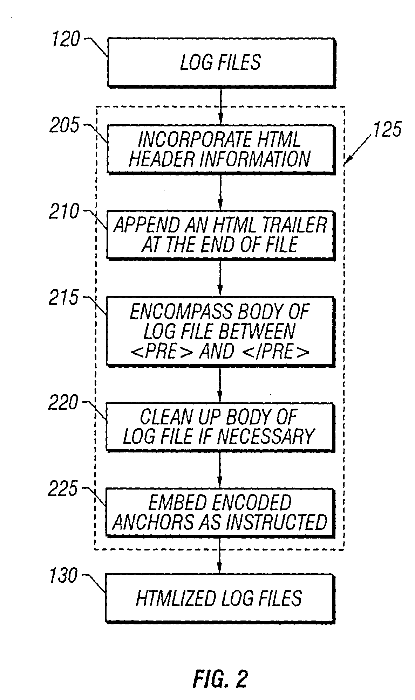

The HTMLizer of block 125 performs several functions as illustrated by FIGURE 2. Minimally, the HTMLizer incorporates certain HTML header information into each of the log files step 205 and appends an HTML trailer at the end of each of the log files step 210. For example, the HTML control code "<PRE>" is placed at the start of the body of the log file and a "</PRE>" is placed at the end of the body step 215. Finally, the HTMLizer ensures that the body of the log file is safe for HTML display by converting all "<," ">," and "&" HTML control characters to HTML escape sequences at step 220. In order to support the generation of metrics, the HTMLizer also embeds encoded inbound anchors into the log files step 225 to create the HTMLized log files. These encoded anchors can be placed to mark errors, warnings, notes, cross-reference points, test cases to be counted, or any other characteristic for which metrics are required or desired. These encoded anchors have the form:
<A name = "*string*">*text*</A>.
Examples of encoded inbound anchors include:
<A name = *"error-index">,*
<A name = "warning-*index*">,
<A name = *"note-index">,*
<A name = "cross-ref-*tempfile-index*">, or
<A name = "count-*type-name [-index]">.*
Additionally the HTMLizer ensures that each of the HTMLized log files file names ends with a ".html" suffix (not shown in FIGURE 2). (Conversely, the file names are checked to ensure that all non-HTML files do not end with the ".html" suffix.)

The specific format of the error/warning/note encoded anchor is
[</B></A>]<A name = "*class-index*"><B> *error-text* {new line}
For example:
<A name = "error-143"> <B> this is an error ...
Additionally, encoded anchor lines may need to include a specific format, i.e., must begin at the start of the line in column 1.

There may be two types of anchors in markup languages such as HTM, outbound anchors and inbound anchors. Outbound anchors are used to transition the user to a different Universal Resource Locator (URL) using a hyperlink. Inbound anchors are labels that mark a location in the file that can be the target of an outbound anchor. Outbound and inbound anchors can be used together to transition a user, first to a different file, and then to a specific location within that file, or to a different location in the same file. Encoded inbound and outbound anchors act as ordinary inbound and outbound anchors but also contain useable information encoded in the inbound anchor label. Such encoded inbound anchors identify the errors, warnings, and notes, and create hyperlinks in the various HTMLized log files. These hyperlinks must be closed as is shown in the previous format. (</B> </A>). The square brackets "[ ]" indicate an optional field. With respect to closing the specific hyperlinks, the optional brackets indicate the hyperlinks may have been closed previously. Since new lines are visible to the browser, extraneous new lines are undesirable and the closing characters of the previous hyperlink necessarily appears on the same physical line as the next hyperlink. This format is necessitated by the enclosure of the body of the log file in the <PRE> format.

Referring back to the specific format of the error/warning/note encoded anchor, the *class* in the format of the encoded inbound anchor may be an error, warning or note or any other aspect of the log file of interest. The *index* of the encoded inbound anchor is a number which is unique throughout the entire log file. The *error-text* of the encoded inbound anchor must be the entire visible text on the physical line and is associated with the anchor which preceded it. In order for the *error-text* to be displayed in bold a <B> must precede the *error-text* and a </B> must be included to turn off the bold format. Additionally, the encoded inbound anchor must be concluded with a </A>.

The *index* number may actually be any string not containing a double quote. If the associated log files are appended to multiple times, the *index* may include a *pid.count* to differentiate inputs from various runs. The *pid* value is a process ID. Finally, if the *error-text* is longer than a single line, the HTMLizer may ensure the *error-text* remains together with an inserted "\" which indicates the error-text is wrapped. Even though several lines of *error-text* may be included in the file, the table of contents file uses or displays only the first line of the *error-text* and the error/warning/note hyperlink labels. In order to ensure that each of the encoded inbound anchors are included in the metrics information, the encoded inbound anchor format may need to be strictly followed. The encoded inbound anchors are also case sensitive, as well as space sensitive.

Referring again to FIGURE 1, the HTMLized log files of block 130 may need to reside in a single directory on the system where the process step was invoked. In this case, the directory must also contain any other related files. The names of the HTMLized log files in block 130 will be used to determine their position in the automatically generated, alphabetically sorted table of contents file. One of the files normally included in the log files after a build includes a "00.top.log.html" in each log directory. Normally, all standard output (i.e., stdout) and standard error (i.e., stderr) goes to this log file unless redirected elsewhere. This log file must also be HTMLized, by the HTMLizer block 125, before it can be included in the table of contents file in block 140. The names of the log files in block 120 should be defined in some logical order and segregated into logical groups. Numeric prefixes can be included in log file names to determine the order and hierarchy in which the files appear in the table of contents file. Since these numeric prefixes are part of the hyperlink Universal Resource Locator (URL) they are not displayed to the user in the hyperlink label. Alternatively, if these numeric prefixes are not included in the names of the log files, the HTMLizer can be configured to insert these numeric prefixes in the HTMLized log file names. For example the numeric prefixes in the following HTMLized log file names:
0.pretop
00.top.log.html
01.revlist
02.01.BEfiles
02.02.BEfiles2
will ensure that the names of these files appear in this specific order in the generated table of contents. Log file names without numeric prefixes naturally sort out, in the table of contents, after those with numeric prefixes and are displayed in one large alphabetized group. Additionally, blank lines can be introduced in the table of contents as separators between groups of log files.

The CPF functions of block 135 may include the capability to scan log files to count encoded inbound anchors, record the counts, and build a table of contents file that lists and includes hyperlinks that reflect a log file directory. Additionally, outbound hyperlinks can be included in the table of contents file to quick reference the location of the corresponding links within the log files. The CPF function block 135 creates the table of contents file in block 140 and the metric files in block 145. The name of the table of contents file created in block 140 is "toc.html". This table of contents file includes hyperlinks to all of the other files found in the directory, ordered and grouped according to the file name convention previously described and may include additional information.

The CPF functions block 135 also gathers the metrics for the metrics files in block 145. Each metrics file may include a number of metrics blocks where each block contains the metrics information for a specific process step run. Each metrics block may describe one invocation of one CPF session or a predefined script, plus a count of the errors, warnings and notes, count of test cases passed and the total number of cases attempted, and coverage (branches) hit and available; or any other parameter of interest found in the log files or elsewhere. The information contained in the metrics files of block 145 is then included in the web pages generated by CGI scripts of block 150 as described below. These web pages include hyperlinks to other related files and to the table of contents file.

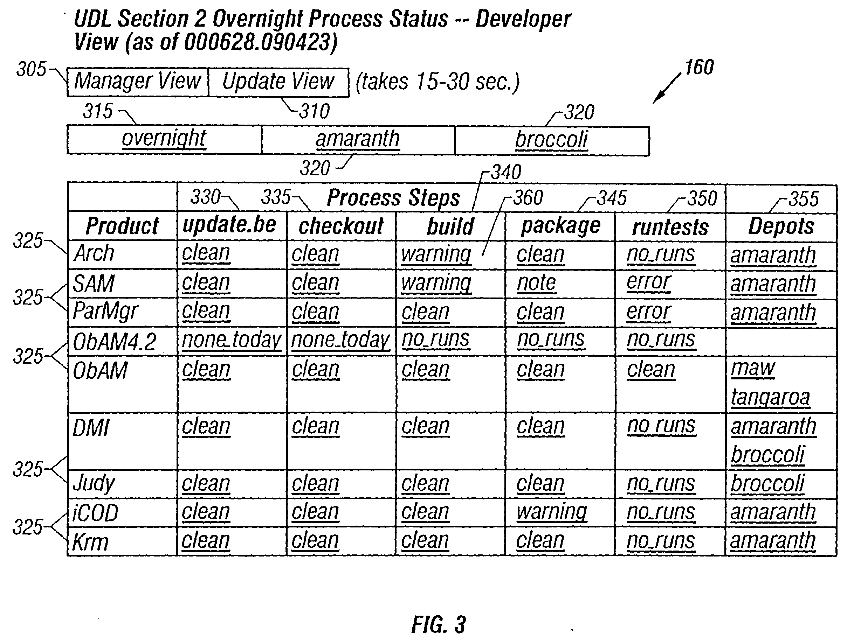

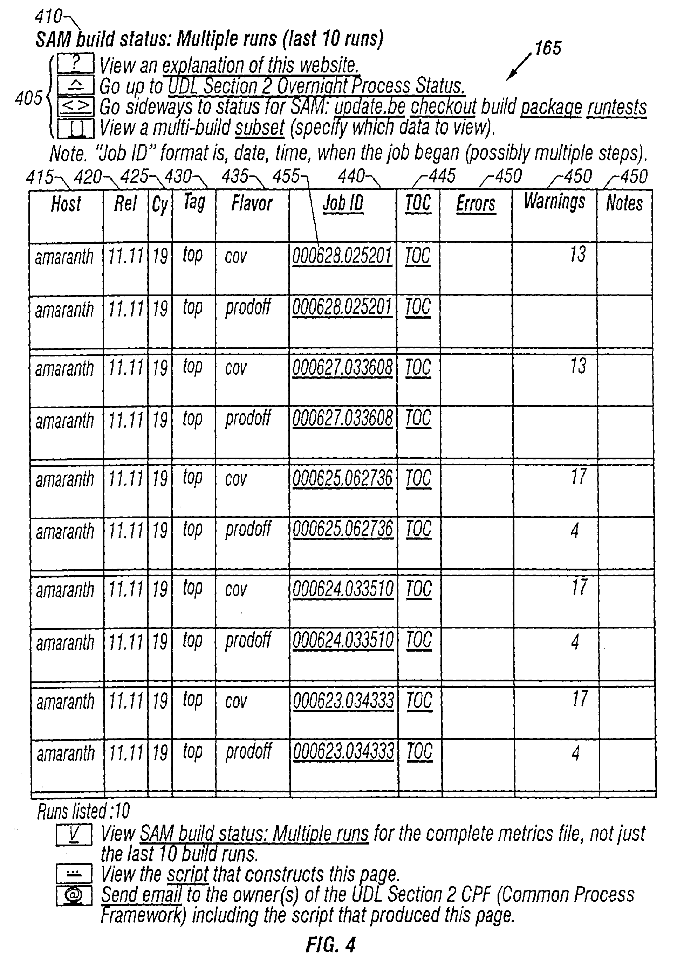

FIGURE 3 is a sample status screen of a developer's view of the build process result. A similar status screen can be made for a manager and which would be selectable from hyperlink 305. Views, on the developer's view, can be updated by selecting the update views button 310. As displayed, FIGURE 3 is a status screen associated with all overnight process for all of a configured set of products. Also available is an overview of the build process steps run overnight by selecting the overnight button 315. The overnight display shows global logs not related to any one product. Alternatively, a figure similar to FIGURE 4 can be displayed for the various machines, in this case, AMARANTH or BROCCOLI, by the selection of the appropriate button 320. If either of these buttons are selected, a table would be displayed which would restrict its view to one system's results.

In the developer's view of FIGURE 3, the cell color (not shown in FIGURE 3) and the associated text indicate the worst case status of all of the runs for that product during the appropriate time. Similar indicia can be included in the other views as well. For example, the Arch-build cell 360 may contain information for 15 builds for which 14 builds were clean and one contained a warning. Since the worst case is displayed in FIGURE 3, the warning appears in the cell. Within each of these cells is a hyperlink which allows the developer to view all of the log results for the appropriate product and process step. In FIGURE 3, nine products are displayed, namely, Arch, SAM, ParMgr, ObAM4.2, ObAM, DMI, Judy, iCOD, and Krm 325. Each product may include many constructed programs or other files. Additionally, five process steps are displayed within FIGURE 3 namely, update.be 330, checkout 335, build 340, package 345, and runtests 350. Update.be column 330 gives the status of the update build environment. This is a collection of tools and directories that allow a programmer to perform a build in a known way while minimizing the presence of variables. The cells within the update.be column indicate to the programmer the status of the build environment prior to the submission of the product's source code to the build environment. An indication of clean in this column means that the build environment was correctly configured to run the build for that product.

The checkout column 335 contains two pieces of information for the developer. The first piece of information is an assurance that the source code is available for the build. The second portion of information can be an assurance that the source code is mounted during the build and within the correct build environment. Together, this information ensures that the source files are available to the build environment so that the build can be completed. These first two columns, update.be 330 and checkout 335, show that the build environment is correct prior to the build being performed.

The build column 340 shows the status of the build process itself. The cells from this column can indicate that the build was clean for the specific product, or that an error, warning or note was encountered. The package column 345 ensures that the files resulting from the build process are available as a bundled product rather than as individual files. For example, the package step might construct a Software Distributor bundle, product, or file set. The runtests 350 column shows the status of automated regression testing, if any, which have been performed on the newly built product. The last column in FIGURE 3, the DEPOTS column 355, allows the developer a way in which to view which packages were successfully built, on which systems they reside, and what information is available concerning these packages. This information would include when the last build was performed and related information.

One of ordinary skill in the art would understand that the specific information or the specific format of FIGURE 3 can be modified to include the information of concern to the developer, programmer, manager or system administrator. Each of the cells at each of the intersections of the horizontal product rows and the process step vertical columns contains a hyperlink which directs the developer to additional details on the specific process step for that specific product. Similarly, the DEPOTS 355 column contains a hyperlink which gives additional information for the specific product for that row. Preferably, coloring is used to highlight information of critical interest to developers. For example, errors are shown in red (not shown in FIGURE 3) to call these errors to the attention of the developer.

FIGURE 4 shows a sample product step status which includes information pertaining to multiple runs. Hyperlinks (405) of FIGURE 4 allow the user to view additional information or different status screens by selecting the respective hyperlink or icon. FIGURE 4 represents the selection of the cell at the intersection of the SAM row of FIGURE 3 and the build column labeled (360). One of ordinary skill in the art would understand that a similar product step status screen is available for any other cell of FIGURE 3. The title of the product step status screen of FIGURE 4 indicates that this is the information pertaining to the SAM build status (410), and includes information for the last ten runs of the SAM build process.

To identify a specific process step run, eight key attributes are required, including the product, the process step, the host name (415), the operating system release (420) and the cycle of the build environment (425), the tag (version) of the source code (430), the flavor of the build (435), and the job ID (440). The host name (415) shows which machine the process step was run on. The release number (420) shows which release the build relates to the operating system. The cycle (425) indicates which integration cycle is associated with the build environment. The tag (430) indicates how the source code was released from the history manager. The history manager is a software configuration manager and is used to store various versions of each source file to show the evolution of the file over time. The "flavor" (435) can be used to show how the executable files were built for specific versions of the constructed files. The job ID (440) is an identifier which is assigned during the build process for a specific run. These eight key attributes can be used to identify a specific overnight process step.

The table of contents (445) column is a hyperlink which allows the user to transition directly to the table of contents for the associated builds, skipping single-run information accessed via hyperlinks in the job ID (440) column. The errors, warnings, and notes columns (450) indicate respectively whether any errors, warnings or notes were encountered during the build of the specific version of this product. Numbers in these columns indicate the number of errors, warnings or notes that were generated during the build process. While FIGURE 4 indicates the status of the last ten runs, similar displays can be configured for other numbers of runs. The counts included in the errors, warnings, or notes columns (450) are provided as a result of the encoded inbound anchors which were included in the "HTMLized" log files. Within FIGURE 4 job ID (440) and the table of contents (445) columns, hyperlinks are included that allow the user to display additional information about these specific cells.

As previously mentioned, each individual cell within FIGURE 3 contains a hyperlink allowing the user to access a product step status screen which displays information for multiple runs. As configured, FIGURE 3 can contain up to one hyperlink per cell of the figure, in this case, 54 hyperlinks in all (nine rows and six columns).

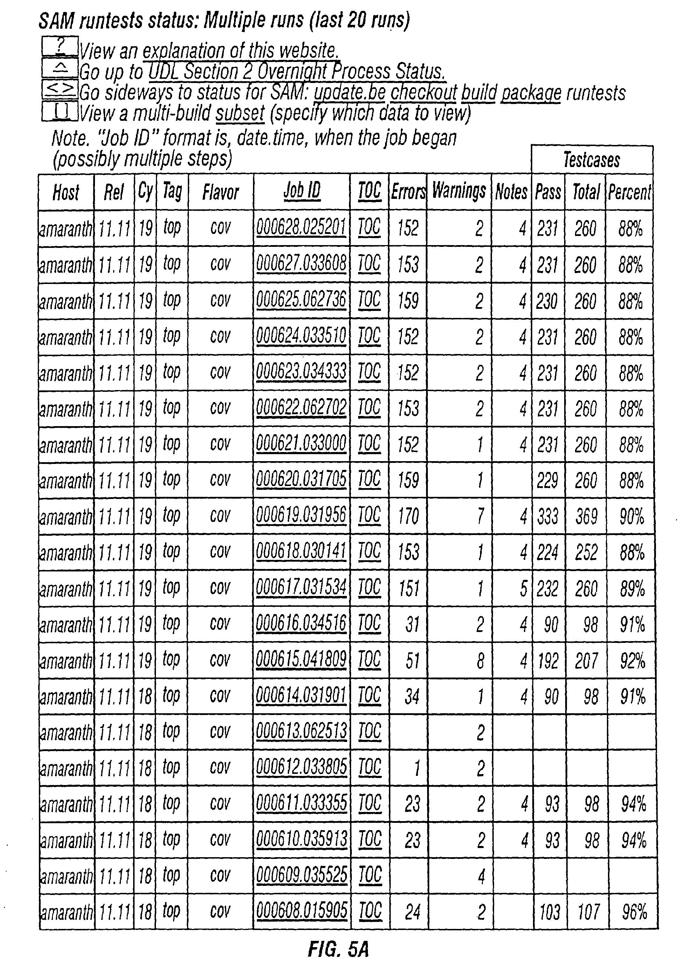

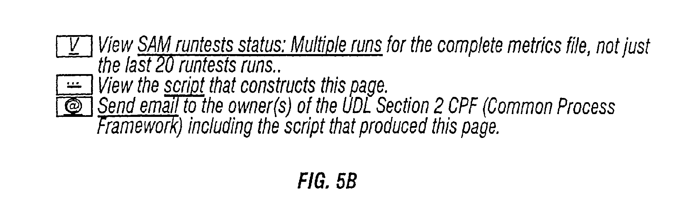

FIGURES 5A and 5B are a runtests status screen for multiple runs for the SAM product and the runtests process step. While FIGURES 5A and 5B include all of the information contained in FIGURE 4, they also contain additional information such as the number of test cases which were run, the number of test cases which were passed, and a percentage which indicates the pass rate. This illustrates the optional use of additional types of encoded inbound anchors.

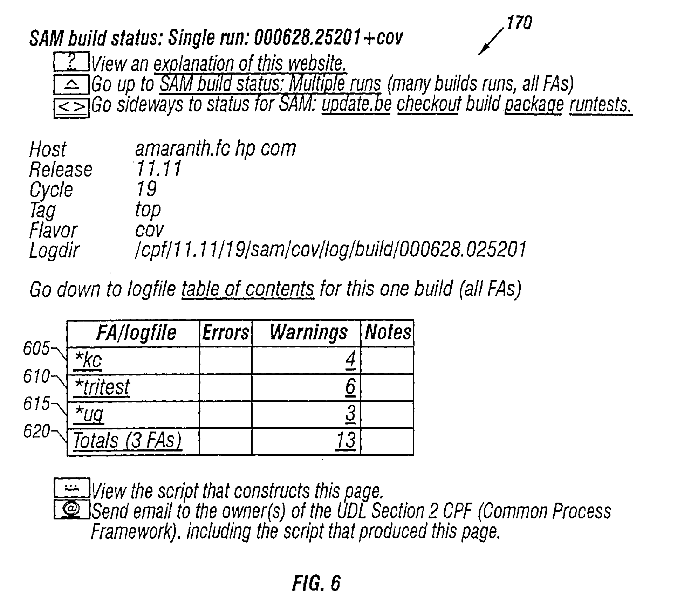

FIGURE 6 is a build status screen provided in connection with a single run of a process step. FIGURE 6 shows the status screen which is displayed if the hyperlink under the job ID column in the first row of FIGURE 4 is selected (indicated by the label 455). FIGURE 6 again shows the eight key attributes and gives additional information about the specific single run. While every functional area of the SAM build run, job ID 000628.025201 was examined, the display only includes the three functional areas (FA) which had potential problems, namely "kc" (605), "tritest" (610), and "ug" (615), and adds a "totals" (620) row. Within each of these rows, the numbers of errors, warnings, and notes are displayed. These specific cells also contain hyperlinks which allow the user to access additional pertinent information. These hyperlinks connect the user to the beginnings of the statistics of these FA in the log files.

As indicated by FIGURE 6, specific products can contain one or more functional areas. For each of these functional areas, a separate build is performed which produces its own log file. While all of these functional areas could be listed in the table of FIGURE 6, in the preferred embodiment of the present invention only those functional areas which have errors, warnings or notes are displayed. By displaying only the functional areas which have errors, warnings or notes, the developer's attention is drawn to the functional areas which have potential problems.

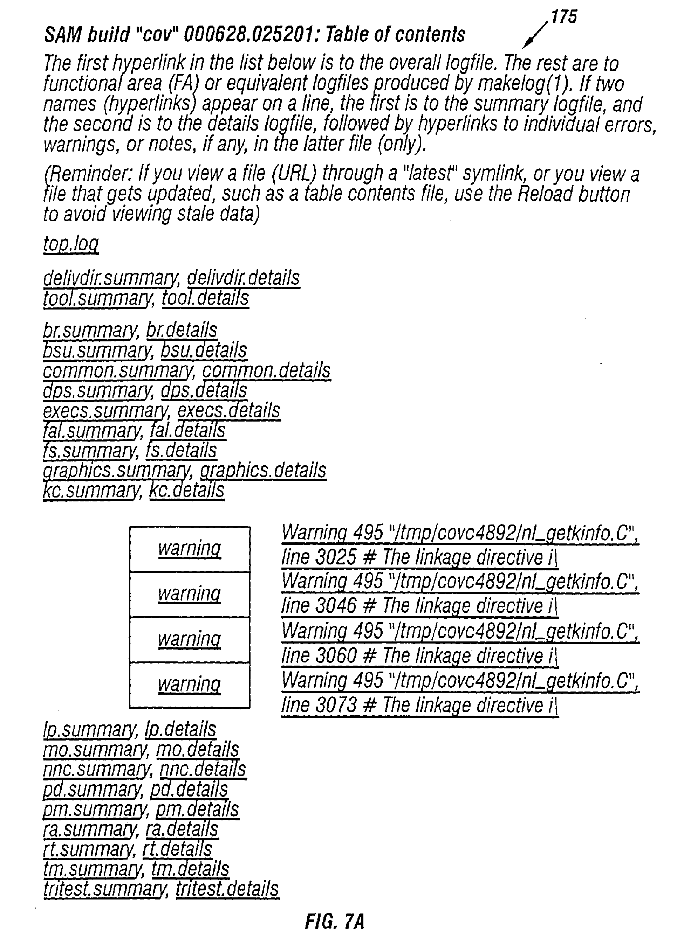

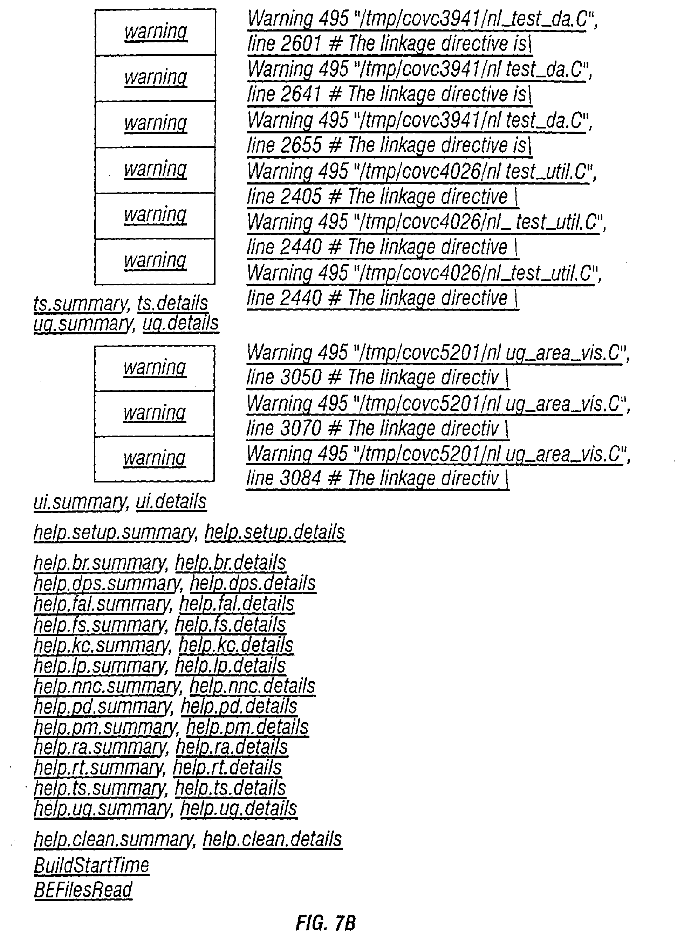

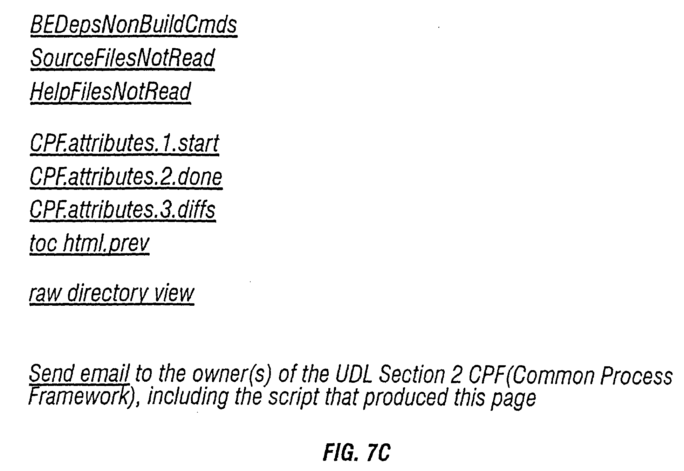

FIGURES 7A, 7B and 7C are a representation of a table of contents, file or page which have been automatically generated. Hyperlinks are included within the table of contents to allow the user to view additional details and associated files. Note that errors, warnings and notes are called out by subsidiary outbound hyperlinks.

Although the present invention and its advantages have been described using log files as an example, one skilled in the art would understand that the terms audit trails and transaction records could be used interchangeably with log files. The invention is equally applicable to other kinds of log files, audit trails, transaction records, including, for example files generated by applications (*e.g.*, compilers and databases) and operating systems (including for example network operating systems). Further, the term log file(s) as used herein includes the original log file directly generated as a result of the build as well as copies of that file or other data generated as a result of parsing, editing, or otherwise incorporating other portions or derivatives of the log file into one or more log files. Similarly, while the description used HTML as an example of a markup language, one skilled in the art would understand that the invention may be used in conjunction with any markup language including Server-Interpreted Hyper-Text Markup Language (SHTML), eXtended Markup Language (XML), Standard Generalized Markup Language (SGML), nroff, troff. The examples given in the application illustrates use of the invention in the context of a specific HTML example using certain requirements of the HTML language, other vanities of encoding the inbound anchors can be used.

Although the present invention and its advantages have been described in detail, it should be understood that various changes, substitutions and alterations can be made herein without departing from the spirit and scope of the invention as defined by the appended claims. Moreover, the scope of the present application is not intended to be limited to the particular embodiments of the process, machine, manufacture, composition of matter, means, methods and steps described in the specification. As one of ordinary skill in the art will readily appreciate from the disclosure of the present invention, processes, machines, manufacture, compositions of matter, means, methods, or steps, presently existing or later to be developed that perform substantially the same function or achieve substantially the same result as the corresponding embodiments described herein may be utilized according to the present invention. Accordingly, the appended claims are intended to include within their scope such processes, machines, manufacture, compositions of matter, means, methods, or steps.

## Claims

1. A method of automatically processing a log file 120 comprising the steps of:
embedding 225 encoded inbound anchors within said log file to mark selected entries in said log file to create a marked up log file 100; and
processing 135 said embedded encoded inbound anchors within said marked up log file.

2. The method of claim 1 wherein the step of embedding 225 encoded inbound anchors within said log files results in HTML files.

3. The method of claim 1 wherein the step of processing 135 said embedded encoded inbound anchors comprises the step of:
indexing said marked up log file using said encoded inbound anchors.

4. The method of claim 3 wherein the step of indexing 135 said marked up log file further comprises the steps of:
creating a table of contents which represents the overall organization of the log files in a directory and draws attention to said encoded inbound anchors.

5. The method of claim 1 wherein the step of processing 135 said embedded encoded inbound anchors comprises the step of:
counting said encoded inbound anchors to determine process metrics.

6. A computer program product recorded on computer readable media for the automatic processing of a log file 120 comprising the steps of:
computer readable means 125 for embedding encoded inbound anchors 225 within said log file to mark selected entries in said log file to create a marked up log file; and
computer readable means for processing 135 said embedded encoded inbound anchors within said marked up log file 130.

7. The computer program product recorded on computer readable media of claim 6 wherein:
the computer readable means for processing 135 said embedded encoded inbound anchors includes computer readable means for indexing said marked up log file 130 using said encoded inbound anchors.

8. The computer program product recorded on computer readable media of claim 7 wherein:
the computer readable means for indexing 135 said marked up log file 130 includes computer readable means for creating a table of contents which represents the overall organization of the log files in a directory and draws attention to said encoded inbound anchors.

9. The computer program product recorded on computer readable media of claim 6 wherein:
the computer readable means for processing 135 said embedded encoded inbound anchors includes computer readable means for counting said encoded inbound anchors to determine process metrics.

10. The computer program product recorded on computer readable media of claim 9 wherein:
the computer readable means for processing 135 said embedded encoded inbound further includes computer readable means for indexing said marked up log file 130 using said encoded inbound anchors.
